# EUROPEAN PATENT SPECIFICATION

(11) **EP 1 389 852 B1**
(45) Date of publication and mention of the grant of the patent: **04.10.2006**
(21) Application number: 02017620.2
(22) Date of filing: 05.08.2002
(51) Int. Cl.: H04L 12/28, H04L 29/06

(54) **Method for performing TCP/IP based communication over a multiple IP-network system**
Verfahren zur Durchfürung TCP/IP-basierter Kommunikation über ein System mit mehreren IP-Netzen
Procédé pour la réalisation de communications basés sur TCP/IP à travers un système de multiples réseaux IP

(43) Date of publication of application: 18.02.2004
(73) Proprietor: Sony Deutschland GmbH, 50829 Köln (DE)
(72) Inventor: Barletta, Antonio, Advanced Techn. Ctr. Stuttgart, Heinrich-Hertz-Str. 1, 70327 Stuttgart (DE); Bittner, Rudolf, Advanced Techn. Ctr. Stuttgart, Heinrich-Hertz-Str. 1, 70327 Stuttgart (DE); Moser, Boris, Advanced Techn. Ctr. Stuttgart, Heinrich-Hertz-Str. 1, 70327 Stuttgart (DE)
(74) Representative: Müller - Hoffmann & Partner

(56) References cited:
- WO-A-01/35585
- US-A- 5 499 343

## Description

The invention relates to a method for performing TCP/IP based communication via different communication networks.

In the last decades, TCP/IP has become one of the most important communication standards. At first, TCP/IP was only used in conjunction with the Internet. In the meantime, however, TCP/IP has been also used in conjunction with other types of communication networks like GSM-networks, GPRS-networks, DAB-networks, DVB-networks and the like to integrate all these systems into a global IP-network.

A central part of the TCP/IP-software architecture, i.e. the IP stack, is the IP-layer which provides routing logic for IP-packets to be sent to a specific location via an IP communication network. The IP-layer may be implemented either as part of an operating system (like Windows or Linux) or as embedded hardware/software solution (used in routers, for example). To each interface of the communication network a unique IP-address is assigned which is used for routing IP-packets between nodes of the communication network. These interfaces are for example LAN network cards or Token Ring network cards. Routers and user terminals represent nodes and end-nodes of an IP-network. Routers normally have more than one IP-interface ("multihomed") while user terminals normally only have a single IP-interface.

However, there is the problem that current available operating systems are designed in a way that the amount/types of communication networks which can be used during runtime are fixed. That is, amount and type of IP-communication networks are normally statically configured in the core of the operating system (Linux or embedded routers) or dynamically configured at boot time (Windows). As a consequence, TCP/IP-communication becomes difficult if amount and/or type of communication networks which are needed for a communication process change during runtime.

Document US 5,499,343 discloses to use a dynamically configurable protocol stack in order to connect a communication device to different communication networks. A similar communication method is disclosed in document WO 01/355 85 A1.

It is an object of the present invention to provide a method which enables a communication device to perform TCP/IP based communication even if communication demands are changing during runtime.

To solve this object, the present invention provides a method for performing TCP/IP based communication via different communication networks according to claim 1. Further, the invention provides an IP-layer according to claim 7. Further, the invention provides a computer program product according to claim 13. Last, a computer readable storage means according to claims 14 is provided. Preferred embodiments and further features of the present invention are provided in respective subclaims.

According to the present invention, a method for performing TCP/IP based communication via different communication networks is provided, wherein
a modified IP-layer provides and/or activates IP-network modules which, on demand, connect a communication device with one of said communication networks via respective IP-network interfaces physically connecting said communication device to said communication networks, respectively,
- said communication device performs TCP/IP based communication via a specific communication network using the corresponding provided/activated IP-network module,
- wherein, on demand, the source address of outgoing IP-packets is replaced by an IP-address assigned to an IP-network interface being different from the IP-address of the IP-network interface via which said outgoing IP-packets are delivered.

An important aspect of the present invention is that the "normal" TCP/IP-software architecture, in particular the IP-layer architecture, is replaced by a modified TCP/IP-software architecture which is capable of dynamically adapting itself to changing communication demands. The modified TCP/IP-software architecture comprises a modified IP-layer which accesses different IP-communication networks by using different IP-network modules. The IP-network modules may all be included within the operating system (IP-layer architecture is one "static software block" comprising different IP-network modules) or selectively be linked on demand (IP-layer architecture comprises different IP-network modules which are dynamically linked together only on demand).

The modified IP-layer may further show means for dynamically determining to which communication networks the communication device is currently connectable. On the basis of a result of this determining process corresponding IP-network modules may then be provided/activated.

Above described method shows the following advantages: First, the communication device has access to an arbitrary number of communication networks. Second, the communication device can communicate via several communication networks which are physically different from each other, respectively (e.g. LAN, WLAN, DAB, DVB-T, etc.), and which show different access characteristics (unidirectional or bi-directional, wireless or wired, etc.). Third, the communication device can maintain a communication process even if the availability of communication networks changes over time or in location (e.g. roaming in a radio network, proximity of hot spot kiosk, etc). Last, the functionality needed to handle different communication networks can be hidden within the modified IP-layer. That is, no changes have to be done with respect to applications which use the modified IP-layer to perform their communication tasks.

In a preferred embodiment the IP-network modules are used on demand to dynamically address respective IP-network interfaces which physically connect the communication device to the communication networks, respectively. Further, different IP-addresses may be dynamically assigned to the IP-network interfaces, respectively. The term "IP-network interface" here preferably means physical network interfaces like network cards. However, the IP-network interfaces may also be realized as software modules, respectively. Above described embodiment enables the communication device to determine the communication process in a way that an outgoing path for sending IP-packets is different from an incoming path for receiving IP-packets, which will become more apparent later on. For example, an information request may be sent via a GPRS-channel, whereas response information may be received via a broadcast channel. As a consequence, the communication device has an influence upon communication costs since the decision which communication network (which may be different in usage costs) is used when sending/receiving IP-packets is taken by the communication device (to be more exact, by the modified IP-layer) itself.

In a preferred embodiment, the dynamical use of the IP-network modules and/or the assignment of different IP-addresses to the IP-network interfaces is dynamically performed in dependency of respective communication network capabilities currently associated with the communication networks, respectively. This enables to achieve higher speed of data transmission.

To perform said IP-interface/IP-address assigning process, a manipulating process manipulates corresponding source addresses of outgoing IP-packets before delivering them via a specific communication network. For example, the manipulation process may replace the source address of outgoing IP-packets by an IP-address assigned to an IP-network interface being different from the IP-address of the IP-network interface via which said outgoing IP-packets are delivered. This manipulating process may also be performed "manually" (using configuration files).

The invention further provides communication device performing TCP/IP based communication and providing an IP-layer comprising means for dynamically providing and/or activating IP-network modules which enable a TCP/IP-connection between a communication device and one of several communication networks, respectively, and means for replacing the source address of outgoing IP-packets by an IP-address assigned to an IP-network interface being different from the IP-address of the IP-network interface via which said outgoing IP packets are delivered.

The communication device performing TCP/IP based communication and providing an IP-layer preferably comprising means for dynamically determining which communication networks are currently available, wherein said means for providing and/or activating IP-network modules provides/activates IP-network modules being assigned to currently available communication networks.

Further, the communication device performing TCP/IP based communication and providing an IP-layer may comprise means for dynamically assigning different IP-addresses to different IP-network interfaces, wherein the IP-network interfaces physically connect the communication device with the communication networks, and are addressable by corresponding IP-network modules, respectively.

The communication device performing TCP/IP based communication and providing an IP-layer may further be linked to an IP-protocol stack API, e.g. socket API. providing an interface between applications and the IP-protocol stack. Preferably, the IP-layer comprises means for dynamically mapping an external IP-address exchanged as a parameter via the IP-protocol stack API to an internal IP-address used by the IP-protocol stack in a communication process between the IP-network interfaces/IP-network modules and the communication networks. That is, an application may always use one single IP-address when dealing with the IP-protocol stack via the IP-protocol stack API. If different networks and therefore different IP-addresses have to be used during a single communication process, the necessary IP-address handling is performed by the IP-layer itself. In other words, in "reality" several IP-addresses are used, whereas between the application and the IP-layer only one "virtual" IP-address is used.

The invention further provides a computer program product comprising computer program means adapted to perform/embody the method/ IP-layer according to the present invention when it is executed on a computer, a digital signal processor, or the like.

Last, a computer readable storage means adapted to store a computer program product according to the present invention is provided.

Further features and embodiments of the present invention will be explained in the following description while making reference to the accompanying drawings, wherein:
- **Fig. 1**: schematically shows a communication system which makes use of the inventive method;
- **Fig. 2**: schematically shows incoming IP address interfaces and outgoing IP address interfaces of IP-hosts;
- **Fig. 3**: shows different states of the IP-layer according to the present invention which correspond to changing numbers of possible communication network accesses;
- **Figs. 4A to 4F**: schematically show preferred embodiments of data structures of IP-packets used during the inventive communication process;
- **Figs. 5a) to 5c)**: schematically show preferred embodiments of TCP/IP-architectures used in conjunction with the inventive communication method;

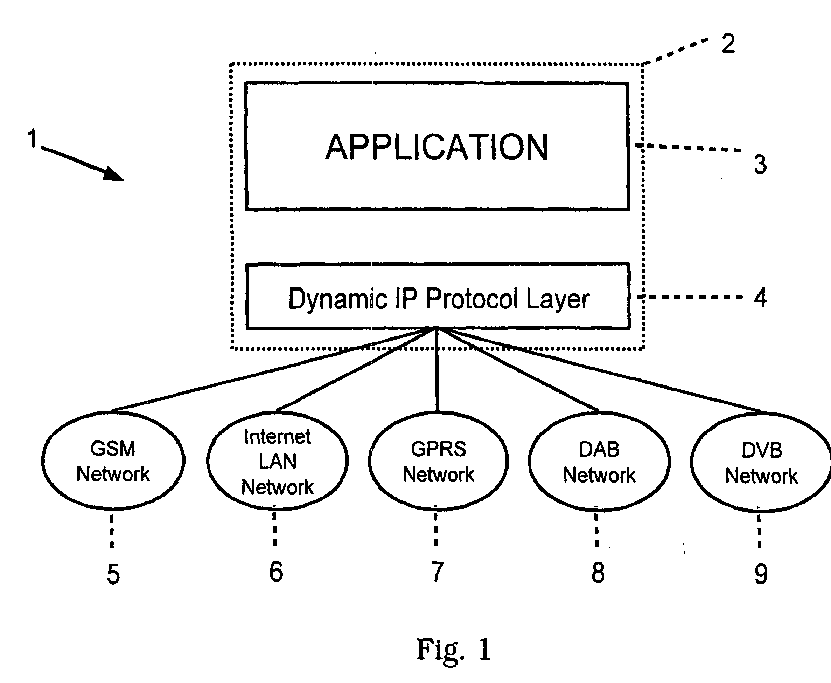

Fig. 1 shows a part of a communication system 1 which comprises a communication device 2 being linked to several communication networks, namely a GSM-network 5, an Internet-network 6, a GPRS-network 7, a DAB-network 8, and a DVB-network 9. The communication device 2 comprises/runs an application 3, for example a network application, and a dynamic IP-layer 4.

In the following description, an example will be given about how a communication process between the communication device 2 and a server being connected to at least two of said communication networks 5 to 9 is performed.

The application 3 (for example a browser software like Netscape Communicator) may for example demand information being provided by a server (not shown) via the Internet-network 6, for example. The server then in response may send the required information for example via the DAB-network 8 back to the application 3. To perform the communication, the IP-layer 4 provides/activates two IP-network modules (one for the Internet-network 6, and one for the DAB-network 8). These IP-network modules connect the network application 3 with the different networks 6 and 8, respectively (via corresponding IP-network interfaces like network cards). In case that the DAB-network 8 is currently not available (no or only bad reception), the dynamic IP-layer 4 recognizes this situation and dynamically determines to which communication networks the communication device 2 may alternatively be connectable at present. For example, the dynamic IP-layer 4 may decide that the information to be transferred from the server to the application 3 should be sent via the GSM-network 5 in the future. To enable this, the dynamic IP-layer 4 provides a corresponding IP-network module for the GSM-network 5 (or activates it if it is already available) and establishes a connection between the application 3 and the GSM-network 5. Then, the dynamic IP-layer 4 determines that the IP-GSM-network module is to be understood as the "IP-packet input" for all incoming data traffic in the future. Therefore, an corresponding IP-address is assigned to a corresponding GSM-IP-network interface being addressed by the IP-GSM-network module, wherein the server is then "instructed" to send desired information via the GSM-network 5 and the GSM-IP-network interface (for example a network card) back to the network application 3. This "instruction" is preferably done by putting as the source address of outgoing IP-packets (here: via the internet-network 6) the IP-address assigned to GSM-IP-network interface. The server then "automatically" sends required information back to the communication device 2/the network application 3 via the GSM-network 5.

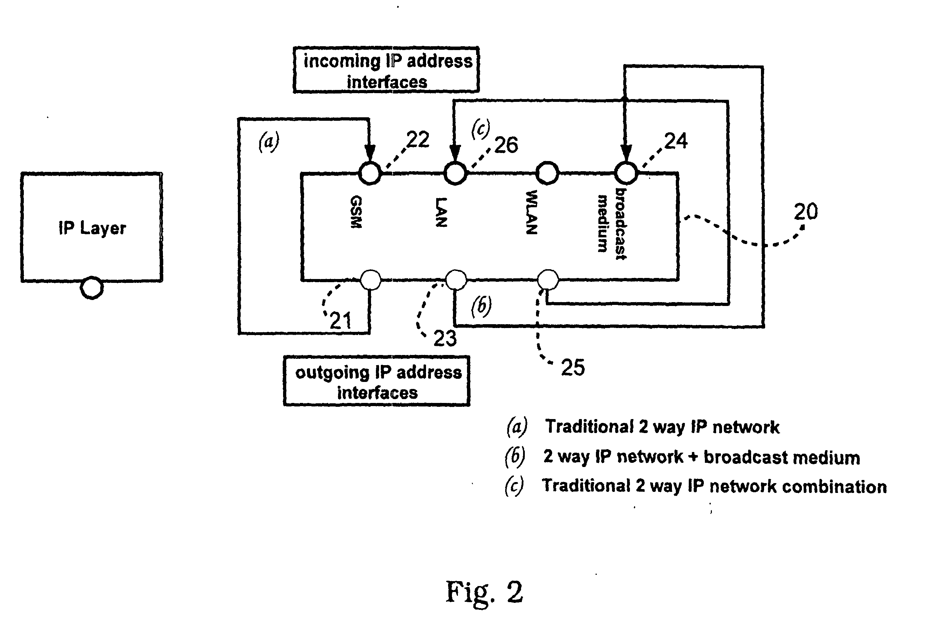

Fig. 2 shows possible incoming IP address interfaces and outgoing IP address interfaces of IP-hosts.

The IP-hosts are indicated by reference numeral 20. In a first example, an IP-host sends IP-packets via a GSM outgoing interface 21 and receives IP-packets via a GSM incoming interface 22. Thus, the corresponding IP-host needs only one network card.

In a second example, an IP-host sends IP-packets via a LAN outgoing interface 23 and receives IP-packets via a digital broadcast incoming interface 24. In this case, the IP-host needs two network cards: One for the LAN-network, and one for the digital broadcast network. Thus, this IP-host can be said to be in a "multihomed" status.

In a third example, an IP-host sends IP-packets via a WLAN outgoing interface 25 and receives IP-packets via a LAN incoming interface 26. The corresponding IP-host therefore needs two network cards, a LAN-network card and a WLAN-network card.

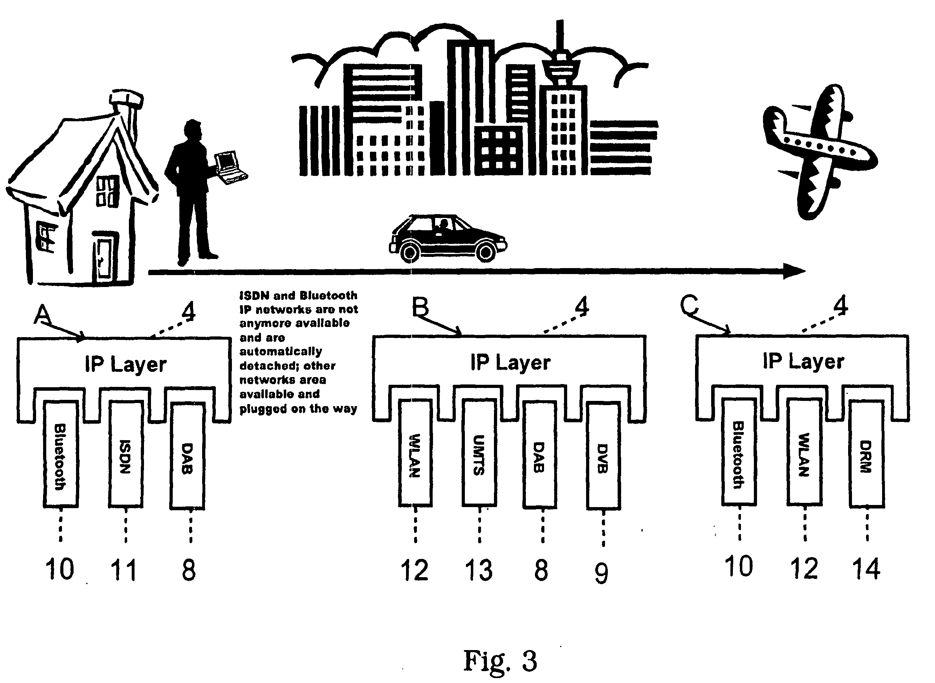

Fig. 3 shows possible states of the inventive IP-layer, which are generated by changing communication network access conditions.

In a first state A, available communication networks are a Bluetooth-communication network 10, an ISDN-communication network 11, and a DAB-communication network 8. This situation is typical in the case that the communication device using the IP-layer 4 is located within a private house. If the communication device is then for example put into a car and transported through a town, the Bluetooth-communication network 10 and the ISDN-communication network 11 are no longer available. Instead, a DVB-communication network 9, a WLAN-communication network 12 and an UMTS-communication network 13 are additionally available beside the DAB-communication network 8. The IP-layer 4 recognizes the situation automatically, deactivates IP-network modules corresponding to the Bluetooth-communication network 10 and the ISDN-communication network 11, respectively. Then, the IP-layer 4 provides/activates IP-network modules corresponding to the communication networks described above which are additionally available. This status of the IP-layer 4 is indicated with reference numerals B. Then, in a third status C, the IP-layer 4 activates/deactivates IP-network modules so that a connection to a Bluetooth-communication network 10, a WLAN-communication network 12 and a DRM-communication network 14 are established. An application using said IP-layer 4 does not "see" anything about the change of accessible communication networks. Therefore, the inventive IP-layer 4 makes it possible to reuse applications which communicate on a TCP/IP-basis in the case that communication network access conditions change over time. The situation of changing network accesses described by Fig. 3 is a general case and includes multiple networks, but the same concept may also be applied for a single IP-network changing automatically among different IP-networks.

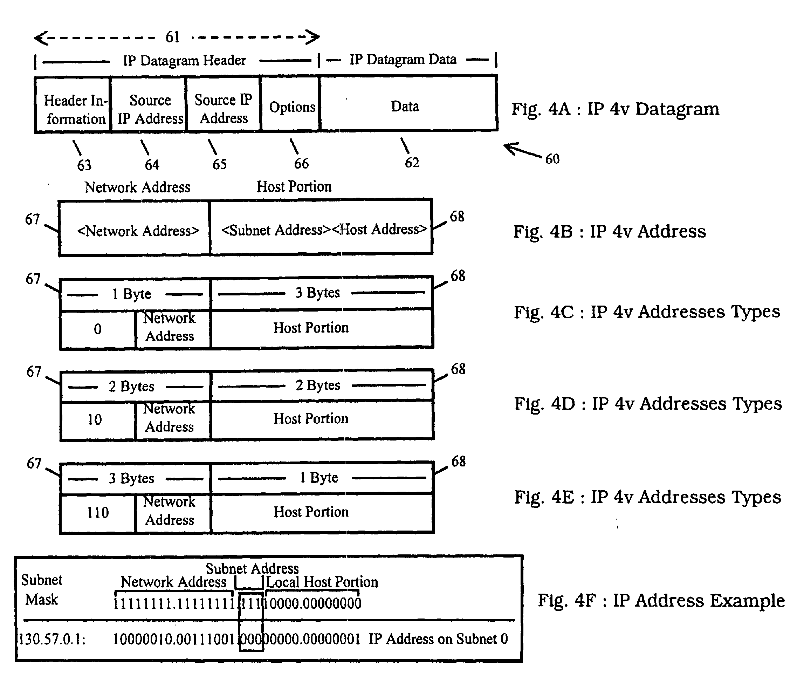

In the following description, making reference to Figs. 4A to 4F, preferred data structures of IP-packets which are used to perform the inventive communication process will be explained.

Fig. 4A shows the data structure of an IP-packet 60 which comprises a header portion 61 and a data portion 62. The header portion 61 comprises a header information block 63, a source IP-address block 64, a destination IP-address block 65 and an options block 66. The actual data which has to be exchanged between communication devices is located within the data portion 62, whereas the header portion 61 mainly comprises routing information.

The general address structure of the source IP-address block 64 and the destination IP-address block 65 are shown in Fig. 4B: Each of the address blocks 64, 65 comprises a network portion 67 containing a network address, and a host portion 68 containing a subnet address and a host address.

Fig. 4C to 4E show respective examples of the general address structure shown in Fig. 4B. Fig. 4C shows an example which uses one byte for the network portion 67 and three bytes for the host portion 68. To indicate this type of address structure, the first bit of the network portion 67 is set to "0". Fig. 4D shows an address structure which uses two bytes for the network portion 67 and two bytes for the host portion 68, wherein this type of address structure is indicated by the first two bits of the network portion 67 which are set to "10". Fig. 4E shows a third possible example of an address structure which uses three bytes to represent the network portion 67 and one byte to represent the host portion 68.

Fig. 4F shows a concrete example of an IP-address which uses the address structure shown in Fig. 4D.

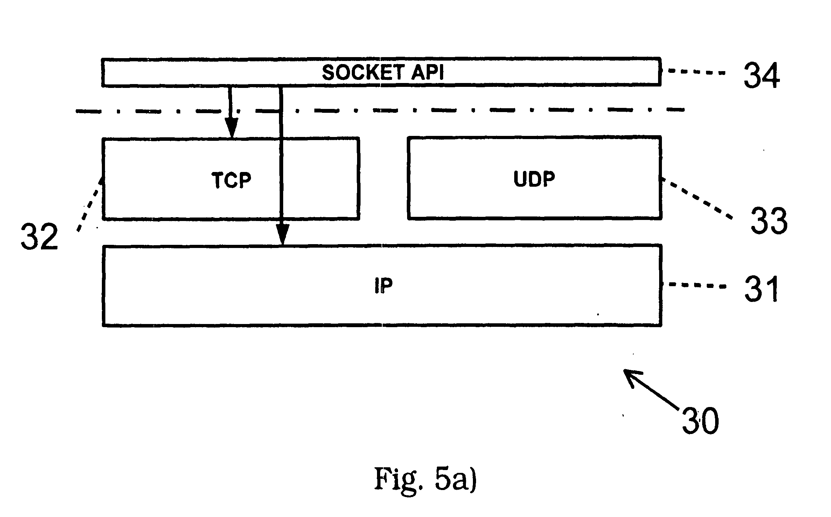

Fig. 5a) shows a TCP/IP-architecture according to the prior art. A TCP/IP-architecture 30 comprises an IP-layer 31, a TCP-layer 32 and an UDP-layer 33. A socket API 34 provides the interface between an application (for example a browser software) and the TCP-IP-architecture 30. In the current state of the art there is the problem that the socket API is not structured in a way that the functionality of the TCP-layer 32, the UDP-layer 33 and the IP-layer 31 are completely hidden behind the socket API 34. Instead, the socket API 34 includes/handles data which is usable by an application, but which belongs to the TCP-layer 32, the UDP-layer 33 or the IP-layer 31 (for example TCP-port and IP-addresses). In other words: Since the socket API 34 is uniquely identified by the IP-source, the IP-destination, the TCP-source and the TCP-destination, there are problems when these parameters are changing due to variable communication network access conditions.

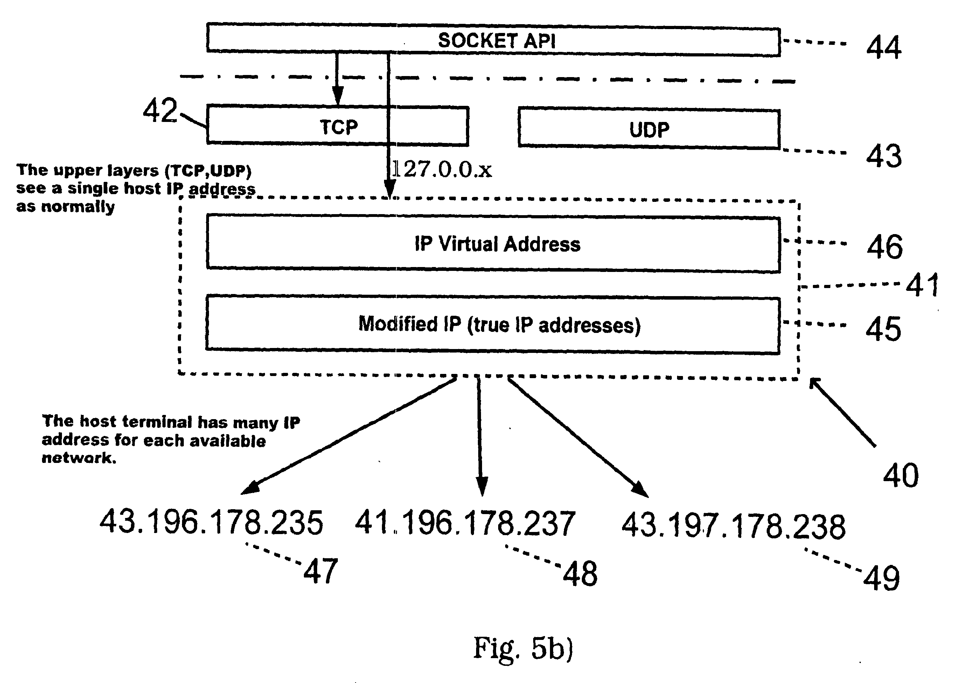

In Fig. 5b), a TCP/IP-architecture 40 is shown which may be a possible solution of this problem. Here, a socket API 44 is uniquely identified by a virtual IP-source, an IP-destination, a TCP-source and TCP-destination. The TCP/IP-architecture 40 also comprises an IP-layer 41, a TCP-layer 42, and an UDP-layer 43. Within the IP-layer 41, an IP virtual address 46, which is "seen" by the TPC-layer 42 and the UDP-layer 43 (or an application using the socket API 44) is mapped onto "modified" IP-addresses (true IP-addresses, i. e. IP-addresses used between the IP-network interfaces and the different communication networks, respectively). Thus, an application which uses the socket API 44 does only have to use one IP-address (namely the IP virtual address 46), whereas the handling of different IP-addresses assigned to different communication networks is handled internally by the IP-layer 41 itself. If for example three communication networks are presently available, the IP-layer 41 assigns three IP-addresses simultaneously, each IP-address corresponding to one available communication network/IP-network interface. This is indicated in Fig. 5b) by the IP-addresses denoted by the reference numerals 47, 48 and 49, each of them corresponding to one communication network/IP-network interface.

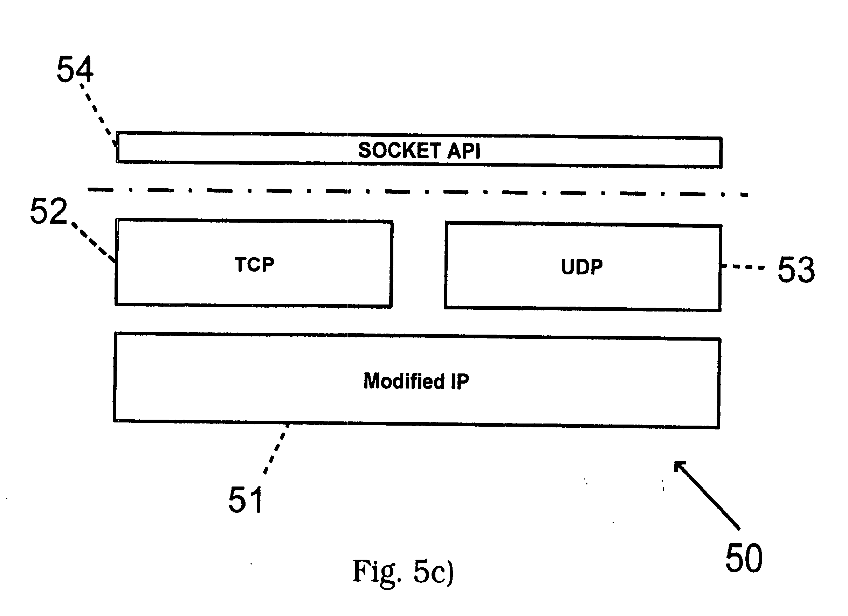

An alternative solution is shown in Fig. 5c). Here a TCP/IP-architecture 50 comprises a modified IP-layer 51, a TCP-layer 52 and an UDP-layer 53. In this embodiment a socket API 54 is independent from the underlying layers 51, 52 and 53. That is, the socket API 54 is not identified by the IP-source, the IP-destination, the TCP-source and the TCP-destination. Therefore, this realization has the disadvantage that changes have to be done as far as the TPC-layer 52 and the UDP-layer 53 are concerned. As a consequence, this solution is not backward compatible.

As has become apparent, there is the problem that the socket API 34 is implemented against a strictly layered architecture: The socket API 34 includes application level data of lower levels (TCP-port and IP-addresses). As a consequence, there are problems because IP-host addresses are multiple for each host and they can change dynamically in the number and in the value (roaming between different cell-based networks can result in different IP-network addresses for the host being connected to said networks).

In Fig. 5(b) this problem is solved by "virtualizing" the usage of IP-addresses at socket API-level (for backward compatibility) in the client side and the use of the dynamic IP-layer 41 with true IP-interface addresses. In this case backward compatibility will be maintained. Such a virtualisation of the IP-source address for the socket layer 44 must be done at the IP-layer 41 for reducing incompatibilities. In detail, an application which intends to use communication networks opens a socket with a specified local IP-address and a specified TCP-port (UDP). Such an IP-address is a virtual one, which means that it is not a real IP-address associated to a specific network card. The underlying IP-layer 41 manages IP-virtual addresses for redirecting properly the IP-packet traffic (using other IP-addresses). In contrast, in Fig. 5(c) a new socket API 54 is used which shows a more independent socket unique addressing mechanism. In this case no backward compatibility with the current TCP (UDP) implementation can be achieved. Such a solution will bring the TCP-suite to a pure layered architecture.

Of course, also other practical implementations for a modified IP-layer are possible.

A sophisticated algorithm may be used within the IP-layer 4, 41, 51 to multiplex IP-packets to the current optimum networks (an algorithm for choosing an optimal path with respect of cost function that measures available bandwidth, cost per Kb and the like). Further, an algorithm may be used which defines different possible paths for IP-packets (the algorithm for example calculates the cumulative bandwidth of the combination of different networks (for example broadcast and GSM)).

As has become apparent, the new conception of the dynamic IP-layer 4, 41, 51 does not effect the TCP/IP-architecture of other elements. The IP-packets produced by the communication device 2 (or, to be more exactly, the network application 3) are complaint to IP-standard specifications. On the way toward a target (for example the server), only the IP-destination address is used for routing purpose; once the IP-packet is received by the server, the IP-source address is used to address the requesting communication device 2.

The socket API (application protocol interface) is an application API based on the TCP-IP/protocol stack. The socket implementation does not support an exchanging process of IP-addresses during a single connection. A socket is uniquely identified by four parameters: IP-source and IP-destination, TCP (UDP)-source and destination port. These parameters are fixed during the TCP or UDP-session. It has to be mentioned that this does not effect the inventive concept described above.

An application example of the dynamic IP-protocol stack according to the present invention is described in the applicants parallel European patent application "IP based communication system using uni- and bi-directional networks" submitted on the same day as this application, which content is herewith included into this application.

### Glossary

**DAB.** Digital Audio Broadcasting: a digital standard for audio broadcasting.
**DVB.** Digital Video Broadcasting: a standard for digital video broadcasting.
**DRM.** Digital Radio Mundial: a standard for digital radio for long range waves.
**DR.** Digital Radio: sometimes this term is used for addressing all the new digital standard for audio broadcasting (DAB, DRM, digital FM).
**GSM**. Global System for Mobile Communication
**GPRS.** General Packet Radio Service
**WLAN.** Wireless Local Area Network
**LAN.** Local Area Network
**UDP.** User Datagram Protocol

### References:

a. *TCP*/*IP Illustrated, Volume 1: The Protocols,* Addison-Wesley 1994, ISBN 0-201-63346-9
b. *TCP*/*IP Illustrated, Volume 2: The Implementation,* Addison-Wesley, 1995, ISBN 0-201-63354-X
c. "Mobility Support in IPv6" by Charles E. Perkins
d. Mobile Networking Through Mobile IP by Charles E. Perkins
   (http://computer:org/internet/vn2n1/perkins.htm)
e. Multi homed Host Support in IPv6
   (http://onoe2.sm.sony.co.jp/ipv6/id/draft-shand-ipv6-multi-homing-01.txt)
f. IP Router Architectures: An Overview (*James Aweya*)
   (http://citeseer.nj.nec.com/432651.html)
g. Invention report: ex "IP based broadcasting communication system"
h. "I-TCP: Indirect TCP for Mobile Hosts" by Ajay Bakre B.R. Badrinath Department of Computer Science Rutgers University, Piscataway, NJ 08855. DCS-TR-314 October, 1994
i. Transport Protocols for IP Traffic over DVB-T by Jonas Haggård Ljungquist (Master thesis Royal Institute of Technology)
   (http://www.e.kth.se/~e92 jlj/Exjobb/xrapport.pdf)

## Claims

1. Method for performing TCP/IP based communication via different communication networks (5 to 9), wherein
- a modified IP-layer (4, 41, 51) provides and/or activates IP-network modules which, on demand, connect a communication device (2) with one of said communication networks (5 to 9) via respective IP-network interfaces physically connecting said communication device (2) to said communication networks (5 to 9), respectively,
- said communication device (2) performs TCP/IP based communication via a specific communication network (5 to 9) using the corresponding provided/activated IP-network module,
- wherein, on demand, the source address of outgoing IP-packets is replaced by an IP-address assigned to an IP-network interface being different from the IP-address of the IP-network interface via which said outgoing IP-packets are delivered.

2. Method according to claim 1, **characterized in that** said modified IP-layer (4, 41, 51) dynamically determines to which communication networks (5 to 9) said communication device (2) currently is connectable.

3. Method according to claim 2, **characterized in that** said modified IP-layer (4, 41, 51) dynamically provides and/or activates said IP-network modules in dependence of a result of said step which determines to which communication networks (5 to 9) said communication device (2) is currently connectable.

4. Method according to anyone of the claims 1 to 3, **characterized in that** said IP-network modules are used on demand to dynamically address respective IP-network interfaces.

5. Method according to claim 4, **characterized by** dynamically assigning different IP-addresses to said IP-network interfaces, respectively.

6. Method according to claim 4 or 5, **characterized in that** said dynamical use of said IP-network modules and/or said assignment of different IP-addresses and said IP-network is dynamically performed in dependency of respective communication network capabilities currently associated with said communication networks (5 to 9), respectively.

7. Communication device performing TCP/IP based communication and providing an IP-layer (4, 41, 51) comprising:
- means for dynamically providing and/or activating, IP-network modules which enable a TCP/IP-connection between a communication device (2) and one of several communication networks (5 to 9), respectively, and
- means for replacing the source address of outgoing IP-packets by an IP-address assigned to an IP-network interface being different from the IP-address of the IP-network interface via which said outgoing IP packets are delivered.

8. Communication device according to claim 7, **characterized by** means for dynamically determining which communication networks (5 to 9) are currently available.

9. Communication device according to claim 8, **characterized in that** said means for providing and/or activating IP-network modules provides/activates IP-network modules being assigned to currently available communication networks (5 to 9).

10. Communication device according to anyone of the claims 7 to 9, **characterized by** means for dynamically assigning different IP-addresses to different IP-network interfaces, said IP-network interfaces physically connecting said communication device (2) with said communication networks (5 to 9), and being addressable by said IP-network modules, respectively.

11. Communication device according to claim 10, **characterized by** a link to an IP-protocol stack API providing an interface between applications and an IP-protocol stack.

12. Communication device according to claim 11, **characterized by** means for dynamically mapping an external IP-address exchanged as a parameter via said IP-protocol stack API to an internal IP-address used by said IP-layer in a communication process between the IP-network interfaces/IP-network modules and the communication networks (5 to 9).

13. Computer program product comprising computer program means adapted to perform method according to claims 1 to 6 or to embody the communication device according to claims 7 to 12 when it is executed on a computer or a digital signal processor.

14. Computer-readable storage means adapted to store a computer program product according to claim 13.

## Patentansprüche

1. Verfahren für die Ausführung einer Kommunikation auf TCP/IP-Basis über verschiedene Kommunikationsnetze (5 bis 9), bei dem
- eine modifizierte IP-Schicht (4, 41, 51) IP-Netzmodule bereitstellt und/oder aktiviert, die auf Anforderung eine Kommunikationsvorrichtung (2) mit einem der Kommunikationsnetze (5 bis 9) über entsprechende IP-Netzschnittstellen verbinden, die ihrerseits die Kommunikationsvorrichtung (2) mit den entsprechenden Kommunikationsnetzen (5 bis 9) physikalisch verbinden,
- die Kommunikationsvorrichtung (2) unter Verwendung des entsprechenden bereitgestellten/aktivierten IP-Netzmoduls eine Kommunikation auf TCP/IP-Basis über ein bestimmtes Kommunikationsnetz (5 bis 9) ausführt,
- wobei auf Anforderung die Quelladresse abgehender IP-Pakete durch eine einer IP-Netzschnittstelle zugewiesene IP-Adresse ersetzt wird, die von der IP-Adresse der IP-Netzschnittstelle, über die die abgehenden IP-Pakete ausgegeben werden, verschieden ist.

2. Verfahren nach Anspruch 1, **dadurch gekennzeichnet, dass** die modifizierte IP-Schicht (4, 41, 51) dynamisch bestimmt, mit welchen Kommunikationsnetzen (5 bis 9) die Kommunikationsvorrichtung (2) momentan verbunden werden kann.

3. Verfahren nach Anspruch 2, **dadurch gekennzeichnet, dass** die modifizierte IP-Schicht (4, 41, 51) die IP-Netzmodule in Abhängigkeit vom Ergebnis des Schrittes, der bestimmt, mit welchen Kommunikationsnetzen (5 bis 9) die Kommunikationsvorrichtung (2) momentan verbunden werden kann, dynamisch bereitstellt und/oder aktiviert.

4. Verfahren nach einem der Ansprüche 1 bis 3, **dadurch gekennzeichnet, dass** die IP-Netzmodule auf Anforderung verwendet werden, um entsprechende IP-Netzschnittstellen dynamisch zu adressieren.

5. Verfahren nach Anspruch 4, **gekennzeichnet durch** dynamisches Zuweisen unterschiedlicher IP-Adressen an die jeweiligen IP-Netzschnittstellen.

6. Verfahren nach Anspruch 4 oder 5, **dadurch gekennzeichnet, dass** die dynamische Verwendung der IP-Netzmodule und/oder die Zuweisung unterschiedlicher IP-Adressen und des IP-Netzes in Abhängigkeit von jeweiligen Kommunikationsnetzfähigkeiten, die momentan den jeweiligen Kommunikationsnetzen (5 bis 9) zugewiesen sind, dynamisch ausgeführt werden.

7. Kommunikationsvorrichtung, die eine Kommunikation auf TCP/IP-Basis ausführt und eine IP-Schicht (4, 41, 51) bereitstellt, mit
- Mitteln zum dynamischen Bereitstellen und/oder Aktivieren von IP-Netzmodulen, die eine TCP/IP-Verbindung zwischen einer Kommunikationsvorrichtung (2) und einem von mehreren Kommunikationsnetzen (5 bis 9) freigeben und
- Mitteln zum Ersetzen der Quelladresse abgehender IP-Pakete durch eine einer IP-Netzschnittstelle zugewiesene IP-Adresse, die von der IP-Adresse der IP-Netzschnittstelle, über die die abgehenden IP-Pakete ausgegeben werden, verschieden ist.

8. Kommunikationsvorrichtung nach Anspruch 7, **gekennzeichnet durch** Mittel zum dynamischen Bestimmen, welche Kommunikationsnetze (5 bis 9) momentan verfügbar sind.

9. Kommunikationsvorrichtung nach Anspruch 8, **dadurch gekennzeichnet, dass** die Mittel zum Bereitstellen und/oder Aktivieren von IP-Netzmodulen IP-Netzmodule bereitstellen/aktivieren, die momentan verfügbaren Kommunikationsnetzen (5 bis 9) zugewiesen sind.

10. Kommunikationsvorrichtung nach einem der Ansprüche 7 bis 9, **gekennzeichnet durch** Mittel zum dynamischen Zuweisen unterschiedlicher IP-Adressen an unterschiedliche IP-Netzschnittstellen, wobei die IP-Netzschnittstellen die Kommunikationsvorrichtung (2) mit den Kommunikationsnetzen (5 bis 9) physikalisch verbinden und **durch** die entsprechenden IP-Netzmodule adressierbar sind.

11. Kommunikationsvorrichtung nach Anspruch 10, **gekennzeichnet durch** eine Verbindungsstrecke zu einem IP-Protokollstapel API, die eine Schnittstelle zwischen Anwendungen und einem IP-Protokollstapel schafft.

12. Kommunikationsvorrichtung nach Anspruch 11, **gekennzeichnet durch** Mittel zum dynamischen Abbilden einer externen IP-Adresse, die als ein Parameter über den IP-Protokollstapel API gegen eine interne IP-Adresse ausgetauscht wird, die von der IP-Schicht in einem Kommunikationsprozess verwendet wird, zwischen den IP-Netzschnittstellen/IP-Netzmodulen und den Kommunikationsnetzen (5 bis 9).

13. Computerprogrammprodukt, das Computerprogrammmittel enthält, die so beschaffen sind, dass sie das Verfahren nach einem der Ansprüche 1 bis 6 ausführen oder die Kommunikationsvorrichtung nach einem der Ansprüche 7 bis 12 verkörpern, wenn sie auf einem Computer oder einem digitalen Signalprozessor ausgeführt werden.

14. Computerlesbare Speichermittel, die so beschaffen sind, dass sie ein Computerprogrammprodukt nach Anspruch 13 speichern.

## Revendications

1. Procédé destiné à effectuer une communication basée sur un transfert TCP/IP par le biais de réseaux de communication différents (5 à 9), dans lequel :
- une couche IP modifiée (4, 41, 51) fournit et/ou active des modules de réseau IP qui, à la demande, connectent un dispositif de communication (2) à l'un parmi lesdits réseaux de communication (5 à 9) par le biais d'interfaces de réseau IP, connectant physiquement ledit dispositif de communication (2) auxdits réseaux de communication (5 à 9), respectivement,
- ledit dispositif de communication (2) effectue une communication basée sur un transfert TCP/IP par le biais d'un réseau de communication (5 à 9) spécifique utilisant le module de réseau IP fourni/activé,
- dans lequel, à la demande, l'adresse source de paquets IP sortants est remplacée par une adresse IP attribuée à une interface de réseau IP différente de l'adresse IP de l'interface de réseau IP par le biais de laquelle lesdits paquets IP sortants sont délivrés.

2. Procédé selon la revendication 1, **caractérisé en ce que** ladite couche IP modifiée (4, 41, 51) détermine dynamiquement vers quels réseaux de communication (5 à 9) ledit dispositif de communication (2) peut actuellement être connecté.

3. Procédé selon la revendication 2, **caractérisé en ce que** ladite couche IP modifiée (4, 41, 51) fournit dynamiquement et/ou active lesdits modules de réseau IP en fonction d'un résultat de ladite étape qui détermine vers quels réseaux de concentrations (5 à 9) ledit dispositif de communication (2) peut actuellement être connecté.

4. Procédé selon l'une quelconque des revendications 1 à 3, **caractérisé en ce que** lesdits modules de réseau IP sont utilisés à la demande afin d'adresser dynamiquement des interfaces de réseau IP respectives.

5. Procédé selon la revendication 4, **caractérisé par** une attribution dynamique d'adresse IP différente auxdites interfaces de réseau IP, respectivement.

6. Procédé selon la revendication 4 ou 5, **caractérisé en ce que** ladite utilisation dynamique desdits modules de réseau IP et/ou ladite attribution d'adresse IP différente et dudit réseau IP est effectuée dynamiquement en fonction de fonctionnalités de réseau de communication respectives actuellement associées auxdits réseaux de communication (5 à 9), respectivement.

7. Dispositif de communication effectuant une communication basée sur un transfert TCP/IP et fournissant une couche IP (4, 41, 51) comprenant :
- un moyen destiné à fournir et/ou activer dynamiquement des modules de réseau IP qui permettent une connexion TCP/IP entre un dispositif de communication (2) et un parmi plusieurs réseaux de communication (5 à 9), respectivement, et
un moyen destiné à remplacer l'adresse source de paquets IP sortants par une adresse IP attribuée à une interface de réseau IP différente de l'adresse IP de l'interface de réseau IP par le biais de laquelle lesdits paquets IP sortants sont délivrés.

8. Dispositif de communication selon la revendication 7, **caractérisé par** un moyen destiné à déterminer dynamiquement quels réseaux de communication (5 à 9) sont actuellement disponibles.

9. Dispositif de communication selon la revendication 8, **caractérisé en ce que** ledit moyen destiné à fournir et/ou activer des modules de réseau IP fournissent/activent des modules de réseau IP attribués à des réseaux de communication (5 à 9) actuellement disponibles.

10. Dispositif de communication selon l'une quelconque des revendications 7 à 9, **caractérisé par** un moyen destiné à attribuer dynamiquement différentes adresses IP à différentes interfaces de réseau IP, lesdites interfaces de réseau IP connectant physiquement ledit dispositif de communication (2) auxdits réseaux de communication (5 à 9), et adressables par lesdits modules de réseau IP, respectivement.

11. Dispositif de communication selon la revendication 10, **caractérisé par** une liaison à une API de pile de protocole IP fournissant une interface entre des applications et une pile de protocole IP.

12. Dispositif de communication selon la revendication 11, **caractérisé par** un moyen destiné à mapper une adresse IP externe échangée en tant qu'un paramètre par le biais de ladite API de pile de protocole IP en une adresse IP interne utilisée par ladite couche IP dans un processus de communication entre les interfaces de réseau IP/module de réseau IP et les réseaux de communication (5 à 9).

13. Produit de programme informatique comprenant un moyen de programme informatique, adapté afin d'effectuer un procédé selon les revendications 1 à 6 ou afin d'incorporer le dispositif de communication selon les revendications 7 à 12 lorsqu'il est exécuté sur un ordinateur ou un processeur de signaux numériques.

14. Moyen de mémorisation pouvant être lu par un ordinateur adapté afin de mémoriser un produit de programme informatique selon la revendication 13.
